# EUROPEAN PATENT APPLICATION

(11) **EP 4 629 204 A1**
(43) Date of publication of application: **08.10.2025**
(21) Application number: 24168476.0
(22) Date of filing: 04.04.2024
(51) Int. Cl.: G07C 9/00

(54) **UNLOCKING SYSTEM, METHOD IMPLEMENTED IN AN ELECTRONIC SYSTEM, COMPUTER PROGRAM PRODUCT AND NON-TRANSITORY INFORMATION STORAGE MEDIUM**

(71) Applicant: Valeo Comfort and Driving Assistance, 94000 Créteil (FR)
(72) Inventor: BARAKAT, Basem, 94000 Créteil (FR); BENMOKHTAR, Rachid, 94000 Créteil (FR); MUSABINI, Antonyo, 94000 Créteil (FR)
(74) Representative: Delplanque, Arnaud

(57) **Abstract**

The invention relates to an unlocking system (10) for a movable panel of a vehicle. According to the invention, the unlocking system comprises:
- an imaging device (12) configured to capture at least one image in a region surrounding the vehicle,
- a biometric recognition device (14), configured to identify a user of the vehicle from the at least one image provided by the imaging device,
- a body detection module (16) fitted to the vehicle door.

## Description

### Technical field

The present invention relates to unlocking systems used, for example, in vehicles.

More particularly, it concerns an unlocking system comprising a biometric recognition device.

The invention applies particularly advantageously to facilitate the unlocking of the movable panels of a vehicle while preventing unwanted unlocking.

### Background art

The principle behind biometric recognition is to identify the user of a vehicle with one or several devices configured to collect and analyse various biometric features of an individual and compare them with those stored in the vehicle's electronic system, in order to identify a recorded user of the vehicle.

To this end, today's vehicles use various biometric recognition techniques, alone or in combination, such as gait analysis or facial recognition, and image analysis techniques such as semantic segmentation or instance segmentation.

In other existing solutions, unlocking and opening from a distance or by contact or by speaking a word each have their drawbacks. Wireless communication between a key and a vehicle can be interrupted, jammed, or hacked. Therefore, there is a need for a simple and effective unlocking system that reduces the occurrence of false positives and false negatives, and not having the drawbacks of wireless communication.

### Summary of invention

In this context, the invention proposes such an unlocking system, comprising: an imaging device configured to capture at least one image in a region surrounding the vehicle, a biometric recognition device, configured to identify a user of the vehicle from the at least one image provided by the imaging device, a body detection module fitted to the vehicle door.

The system enables an individual to gain access to the vehicle, i.e. to unlock a vehicle movable panel, in two steps. Firstly, the individual must be recognized as a registered user of the vehicle by the recognition device, and secondly, the individual must activate the body detection module. Once a user has been detected in the immediate vicinity of the vehicle, the body detection module is used to check that the user wishes to access the vehicle and allows a secure and efficient access to the vehicle.

According to other optional (and therefore non-limiting) features:
- the body detection module comprises a capacitive proximity sensor configured to detect the presence of a human hand.
- the biometric recognition device comprises an artificial neural network which has been trained by deep learning to identify the vehicle user.
- the biometric recognition device is configured to perform facial recognition on the at least one image captured by the imaging device.
- the biometric recognition device is configured to perform instance segmentation on the at least one image captured by the imaging device.
- the imaging device is configured to capture at least two images in a region surrounding the vehicle, and the biometric recognition device is configured to perform a gait analysis from the at least two images captured by the imaging device.
The invention also proposes a method implemented in an electronic system equipping a vehicle, the method comprising the following steps:
E11) capturing at least one image in a region surrounding the vehicle,
E21) identifying a user of the vehicle from the at least one captured image,
if the user is identified in step E21), a step E31) of detecting a human hand in the vicinity of a movable panel of the vehicle,
if a hand is detected in the vicinity of the vehicle door, a step E41) of unlocking the vehicle door.

According to other optional (and therefore non-limiting) features:
- if the unlocking step E41) is carried out, a feedback and advice step E51) for the vehicle user.
- the method further comprises a confidence score determination step E22) during which a confidence score is associated with the user identity determined during step E21).

The invention also provides a computer program product comprising one or more sequences of instructions which are accessible to a processor and which, when executed by said processor, cause said processor to implement a process according to one of the possible embodiments.

The invention also proposes a non-transitory information storage medium, in which it stores one or more instruction sequences accessible to a processor and which, when executed by said processor, cause said processor to implement a process according to one of the possible embodiments.

The various features, variants and embodiments of the invention can be combined with one another in various ways, as long as they are not incompatible or mutually exclusive.

### Brief description of the drawings

In addition, various other features of the invention are apparent from the appended description with reference to the drawings, which illustrate non-limiting embodiments of the invention and in which:
[Fig. 1] is a schematic representation of a vehicle with imaging devices facing outwards and the area of detection of the cameras. Figure 1 also shows individuals and objects in the vicinity of the vehicle.
[Fig. 2] is a block diagram of a vehicle comprising an unlocking system according to one embodiment of the invention, and
[Fig. 3] is a schematic representation of a vehicle movable panel comprising a capacitive proximity sensor configured to detect the presence of a human hand.
[Fig. 4] is a summary diagram of a method for unlocking the movable panel of a vehicle using the unlocking system shown in [Fig. 2] according to one embodiment of the invention.

It should be noted that in these figures, structural and/or functional elements common to the different variants may have the same references.

### Detailed description of the preferred embodiments

As is appropriate, detailed embodiments of the present disclosure are disclosed herein; however, it should be understood that the disclosed embodiments are only examples of the invention, which can be implemented in various and alternative forms. The figures do not necessarily represent a detailed design; some diagrams may be exaggerated or minimized to show an overview of the function. Therefore, the specific structural and functional details disclosed herein are not to be construed as limiting, but merely as a representative basis for teaching a person skilled in the art to use the present invention in a variety of ways.

It is understood that the specific devices and method illustrated in the accompanying drawings, and described in the following specification, are merely exemplary embodiments of the inventive concepts defined in the appended claims. Accordingly, the specific dimensions and other physical characteristics relating to the embodiments disclosed herein are not to be considered limiting, unless the claims expressly state otherwise.

In this document, the term "and/or", when used in a list of two or more items, means that any one of the items listed may be used alone, or that any combination of two or more items in the list may be used.

The terms "the," "a," or "an," mean "at least one," and are not limited to "only one" unless explicitly indicated to the contrary. For example, "a component" includes embodiments having two or more such components unless the context clearly indicates otherwise.

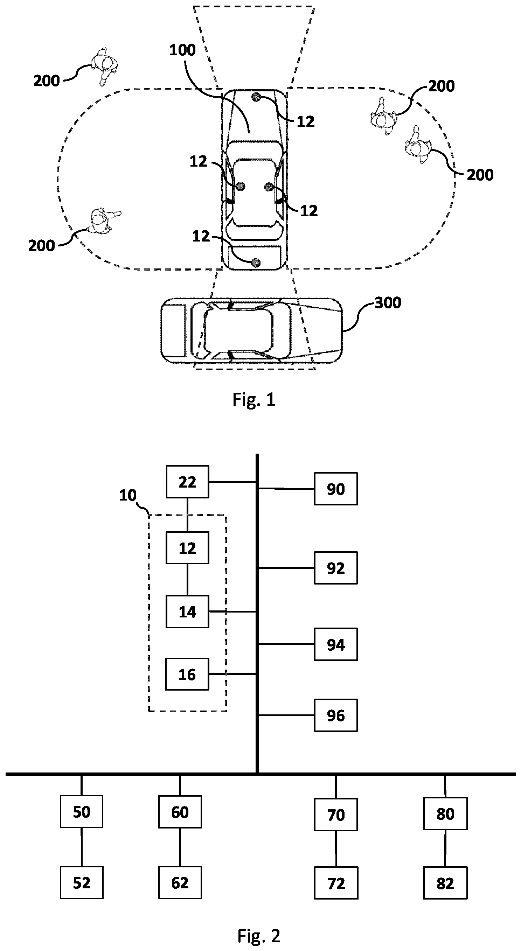

A vehicle 100 equipped with imaging devices 12 is shown in [Fig. 1]. In the embodiment shown, the vehicle 100 is a car. In the vicinity of the vehicle 100, individuals 200 and objects 300 are represented as well as the imaging devices 12 viewing angles and ranges. The combination of an angle of view and a range constitutes a detection area within which an element such as an object or a living being can be detected.

According to the invention, the vicinity to the vehicle 100 is defined by the range of the imaging devices 12, which is, for example, 15 meters. The imaging devices 12 may consist of a plurality of different detectors each with a different range, for example 15 meters for a first type of detector and 10 meters for a second type of detector. In the preferred embodiment of the invention, the detectors are chosen to all have the same range, for example, 15 meters. Advantageously, this enables the different types of detectors to operate in concert over a common detection range.

In the considered embodiment, the imaging devices 12 are located on different sides of the vehicle 100, for example, on the roof and/or on opposite lateral sides and/or near the roof and forward of the B-pillars, and/or near the roof and rearward of the B-pillars and/or on the front fascia and/or on the rear fascia and/or near the upper edge of the windshield of the vehicle 100. Each of the imaging devices can acquire images of areas in space around the perimeter of the vehicle 100, covering in particular the movable panel zones.

When an individual enters the detection area of one or more imaging devices 12, an unlocking system determines whether this individual wishes to access the vehicle and whether access is authorized for this individual. The unlocking system is further configured to provide feedback and guidance to the authorized user of the vehicle using, for example, LED lights or a display screen and sounds, texts, or icons.

An unlocking system 10 for unlocking the movable panel of a vehicle is shown schematically in [Fig. 2], together with its peripheral components. The unlocking system 10 is mounted on a vehicle. In addition to the unlocking system 10, the following components are mounted on the vehicle: an imaging device control unit 22, an electronic control unit (ECU referred to here as a control unit) 90, a storage unit 92, a communication unit 94 and a navigation system 96, a sound device control unit 50 connected to a sound device 52, a visual element generating device control unit 60 connected to a visual element generating device 62, a vehicle seat control unit 70 connected to the seats 72 of the vehicle, a vehicle locking system control unit 80 connected to a vehicle locking system 82.

In addition to the various elements described above, many other devices can be integrated into the vehicle, such as weather, light and obstacle detectors, although these elements are not shown in Figure 1.

The control unit 90 controls the control units 50, 60, 70 and 80.

The control unit 90 also controls the imaging device control unit 22.

The control unit 90 is also used to control the unlocking system 10, which unlocks one or a plurality of movable panels of the vehicle on the basis of data provided by a number of external vehicle sensors.

The sound device control unit 50 controls the sound device 52. The sound device 52 enables the emission of sound signals audible to the driver of the vehicle. In a motor vehicle, the sound device 52 is, for example, connected to the loudspeakers present in the vehicle.

The visual element generating device control unit 60 controls the visual element generating device 62. In a motor vehicle, the visual element generation device 62 is, for example, a head-up display comprising a device for generating images visible to the driver of the vehicle, such as a light source coupled to a screen. The screen can be, for example, a matrix of variable-transmission elements such as a liquid crystal display (LCD), or a diffuser whose upstream face is configured to be scanned by a laser beam and on which the image is formed ("laser scanning" technology).

The vehicle seat control unit 70 controls the seats 72 of the vehicle. The seats 72 are configured such that seat distance from steering wheel, vehicle seat height and inclination can be modified by the vehicle seat control unit 70.

The vehicle locking system control unit 80 controls the vehicle locking system 82. The vehicle locking system 82 is configured to lock or unlock each of the movable panels of the vehicle independently.

The communication unit 94 enables remote communication with a server located outside the vehicle, with other vehicles, etc. The communication unit 94 can receive information concerning the vehicle's immediate environment and/or the route taken by the vehicle. Communication unit 94 can receive information about the vehicle's immediate environment and/or the route taken by the vehicle. Communication unit 94 is connected to the navigation system, to which it can communicate the information received.

The unlocking system 10 comprises at least one imaging device 12 configured to capture at least one image in a region surrounding the vehicle. The imaging device 12 comprises, for example, a camera and/or a photographic camera and/or an infrared camera.

The unlocking system 10 further comprises a biometric recognition device 14, configured to identify a user of the vehicle from the at least one image provided by the imaging device 12. In the preferred embodiment, the biometric recognition device 14 is embedded in the unlocking system 10 which is in the vehicle 100. As a variant, the biometric recognition device may be located on a remote server. The at least one image captured by the imaging device 12 is send to the remote server via the communication unit 94.

The biometric recognition device 14 is configured to determine whether an authorized user of the vehicle 100 is located in the immediate vicinity of the vehicle 100 from the images provided by the imaging device 12. Identification of an authorized user is achieved by performing, for example, facial recognition and/or instance segmentation on at least one image captured by the imaging device 12.

Instance segmentation is performed to separate individuals and objects from each other within the at least one image provided by the imaging device 12. In the considered embodiment, instance segmentation is performed to identify a user of the vehicle 100 by comparing the different individuals identified within the at least one image provided by the imaging device 12 with the profile of the individuals stored in the memory 92.

Facial recognition consists in recognizing facial features within the at least one image provided by image device 12 and associating these facial features with the profile of an individual stored in the memory 92.

Identification of an authorized user of the vehicle 100 is further achieved by performing, for example, gait analysis from at least two images captured by the imaging device 12.

In the preferred embodiment, the biometric recognition device 14 comprises an artificial neural network which has been trained by deep learning to identify the vehicle user. In the preferred embodiment, the artificial neural network performs gait analysis and/or instance segmentation and/or face recognition on the images provided by the imaging device 12 and compare each individual identified in the provided images with individual profiles stored in the memory 92 to output an identity label. The identity label corresponds either to an individual profile contained in memory 92 and therefore referenced as a recognized user of the vehicle 100 to which access is authorized, or to a profile not contained in memory 92 and therefore identified as a non-user of the vehicle 100 to which access is not authorized.

In the preferred embodiment, the artificial neural network performs gait analysis, instance segmentation and face recognition on the images provided by the imaging device 12 and compare each individual identified in the provided images with individual profiles stored in the memory 92 to further output a confidence score. The confidence score represents the degree of confidence associated with the identification of each individual. This confidence score is evaluated using at least one cost function associated with the deep learning identification procedure used by the recognition device 14. Access to the interior of the vehicle is granted if the individual's confidence score is greater of equal to an access threshold. The threshold is defined, for example, by the manufacturer of the vehicle 100 and/or is defined by the owner of the vehicle 100.

In the preferred embodiment, the artificial neural network consists of three sub-networks: a gait analysis network, an instance segmentation network, and a face recognition network. Each sub-network takes the images of the driver's face and body as input and outputs a feature vector that represents the identity of the driver. The feature vectors from the three sub-networks are then concatenated and fed into a fully connected layer that reduces the dimensionality of the features. The output of the fully connected layer is then fed into an output layer that outputs an identity label and a confidence score.

The gait analysis network, for example, takes a sequence of gait images as input and outputs a feature vector that represents the identity of the driver based on the gait pattern. The gait analysis network consists of a 1D convolutional layer, a max pooling layer, a bidirectional LSTM (Long Short Term Memory) layer, and a fully connected layer. The 1D convolutional layer applies a set of filters to the input sequence to extract local features. The max pooling layer reduces the dimensionality of the features and introduces some invariance to noise and distortion. The bidirectional LSTM layer captures the temporal dynamics of the gait sequence by processing it in both forward and backward directions. The fully connected layer maps the output of the LSTM layer to a lower-dimensional feature vector.

The instance segmentation network, for example, takes a single gait image as input and outputs a feature vector that represents the identity of the driver based on the segmentation of the body parts. The instance segmentation network consists of a 2D convolutional layer, a batch normalization layer, a YOLOv3-Human layer, and a fully connected layer. The 2D convolutional layer applies a set of filters to the input image to extract local features. The batch normalization layer normalizes the features and improves the network stability and performance. The YOLOv3-Human layer detects and segments the body parts of the driver using a pre-trained model. The fully connected layer maps the output of the YOLOv3-Human layer to a lower-dimensional feature vector.

The face recognition network, for example, takes a single face image as input and outputs a feature vector that represents the identity of the driver based on the face features. The face recognition network consists of a 2D convolutional layer, a batch normalization layer, a recurrent convolutional layer, and a fully connected layer. The 2D convolutional layer applies a set of filters to the input image to extract local features. The batch normalization layer normalizes the features and improves the network stability and performance. The recurrent convolutional layer processes the features in a recurrent manner to capture the spatial dependencies of the face features. The fully connected layer maps the output of the recurrent convolutional layer to a lower-dimensional feature vector.

A concatenation layer, a fully connected layer and an output layer then process the output such that the output consists in 2 outputs units, one for the identity label and one for the confidence score. Therefore, the output size is 2.

The biometric recognition device 14 further performs trajectory analysis on the images provided by the imaging device 12. Trajectory analysis allow the biometric recognition device 14 to determine whether an individual, based on his trajectory, wishes to gain access to the interior of the vehicle 100. Trajectory analysis is further used to determine which vehicle movable panel the individual is heading for. Advantageously, the invention can handle multiple users or multiple doors, such as opening the door only for the authorized user or opening the door that the user wants to access. Advantageously, this function enhances user identification if the user moves towards a movable panel for which he is associated. Advantageously, this function further allows the confidence score determined by the imaging device 12 to be raised if the user goes to a movable panel with which he is associated, or lowered the confidence score if the user goes to a movable panel with which he is not associated. Alternatively, the access threshold is lowered if the user moves towards a movable panel for which he is associated or raised if the user goes to a movable panel with which he is not associated.

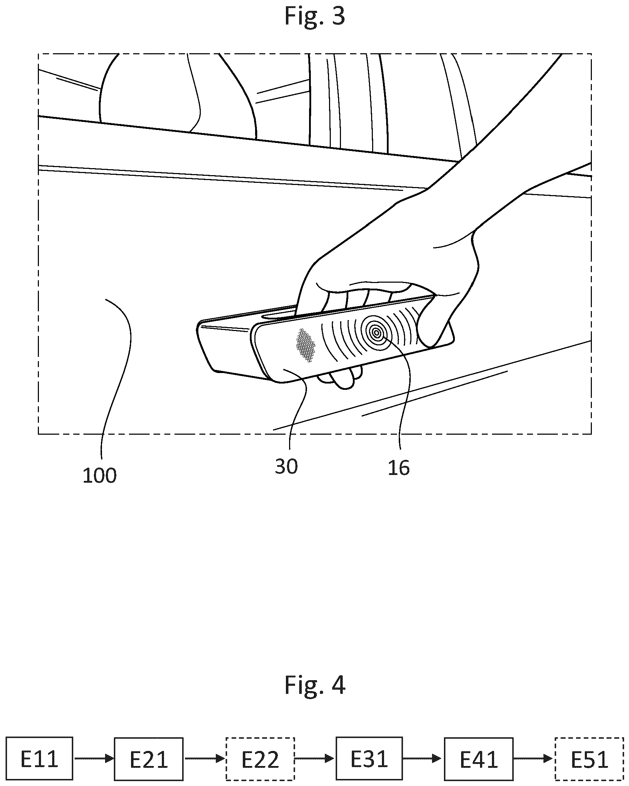

The unlocking system 10 further comprises a body detection module 16 fitted to the vehicle door, for example, in the door handle 30 of the vehicle 100, configured to detect the presence of a human being or a part of a human being, for example, a hand, as shown in [Fig. 3]. Such a presence can be detected by contact with the detection module 16 or by proximity to the detection module 16, for example, within 5 cm of the detection module. In the preferred embodiment, the body detection module 16 comprises a capacitive proximity sensor configured to detect the presence of a human hand.

The system enables an individual to gain access to the vehicle 100, i.e. to unlock a vehicle movable panel, in two steps. Firstly, the individual must be recognized as a registered user of the vehicle 100 by the recognition device 14, and secondly, the individual must activate the body detection module 16. When both conditions are met, the vehicle locking system control unit 80 controls the vehicle locking system 82 to unlock the movable vehicle panel for which the detection module has detected a human being or part of a human being. Alternatively, the vehicle locking system control unit 80 is configured to controls the vehicle locking system 82 to unlock all the moveable panels when a detection module has detected a human being or part of a human being.

Preferably, when the user has gained access to the vehicle interior, feedback and guidance are provided by the sound device 52 and/or the visual element generating device 62. Feedback and advice consist of light and/or sound signals designed to help the vehicle user access the vehicle and, in the case of the vehicle driver, to help him adopt an optimum driving position, for example, by determining if the driver is at a correct distance from the steering wheel using an interior camera of the vehicle and/or check that he is fit to drive, for example, by means of a drowsiness detection system. Preferably, when a registered vehicle user accesses the vehicle interior, the vehicle seat control unit 70 controls the vehicle seats 72 to adjust the parameters of the seat on which the vehicle user is sitting, such as seat distance from steering wheel, vehicle seat height and inclination, to suit the vehicle user.

Advantageously, the invention does not rely on the wireless communication between a key and the vehicle 100, which can be interrupted, jammed, or hacked. Advantageously, the invention does not require the user to perform any active actions, such as pressing a button, scanning a finger, or speaking a word, which can be inconvenient, slow, or inaccurate. Advantageously, the invention can prevent false positives and false negatives, such as opening the door when the user does not intend to, or not opening the door when the user wants to.

The invention also relates to methods implemented in an electronic system equipping a vehicle. The unlocking system 10 of a vehicle 100 can, for example, be advantageously used to implement such methods.

The invention also relates to a method implemented in an electronic system equipping a vehicle shown in [Fig. 1] and comprising, as shown in [Fig. 4]:
- a step for capturing E11) at least one image in a region surrounding the vehicle,
- a step for identifying E21) a user of the vehicle from the at least one captured image,
- if the user is identified in step E21), a step for detecting E31) a human hand in the vicinity of a movable panel of the vehicle,
- if a hand is detected in the vicinity of the vehicle door, a step for unlocking E41) the vehicle door.

During the step for capturing E11), at least one image in a region surrounding the vehicle is captured by an imaging device equipping the vehicle, for example, the imaging device 12 of the unlocking system 10. Preferably, the imaging device is configured to capture images of the region surrounding the vehicle only when a living being enters the range of detection of the imaging device.

During the step for identifying E21), a registered user of the vehicle is identified from the at least one image captured during the step for capturing E11), using, for example, the biometric recognition device 14 of the unlocking system 10. Preferably, the identification step E21) of a registered user of the vehicle is itself performed in two steps. Firstly, the presence of a human being is identified in the at least one image captured during the step for capturing E11) and secondly, if a human being is detected, the features of the human being are compared to the registered profiles stored, for example, in a memory of the vehicle or in a distant server.

During the step for detecting E31), a human hand is detected in the vicinity of a movable panel of the vehicle, using, for example, the body detection module 16 of the unlocking system 10.

if a registered user of the vehicle is detected during the step for identifying E21), during the step for unlocking E41), the vehicle movable panel in the vicinity of which a hand has been detected is unlocked. As an alternative, all the door of the vehicle are unlocked, using, for example, the central door locking system of the vehicle.

Preferably, if the unlocking system is carried out, the method further comprises a feedback and advice step E51) for the vehicle user during which feedback and advises are provided to the user of the vehicle, using for example the sound device 52 and the visual element generating device 62.

Preferably, the method further comprises a confidence score determination step E22) during which a confidence score is associated with the user identity determined during step E21). During the confidence score determination step E22), the confidence score is compared to an access threshold and access to the vehicle is granted to the user only if his confidence score is greater or equal to the access threshold.

The invention also proposes a computer program product comprising one or more sequences of instructions which are accessible to a processor and which, when executed by said processor, cause said processor to implement a process according to one of the possible embodiments.

The invention also provides a non-transitory information storage medium, in which it stores one or more sequences of instructions which are accessible to a processor and which, when executed by said processor, cause said processor to implement a process according to one of the possible embodiments.

It should be noted that some or all of the operations of the various methods in which the above embodiments may be understood by the person skilled in the art may be accomplished by instructing the relevant hardware via the computer program, and the computer program may be stored in the computer-readable storage medium, which may include, but is not limited to: read-only memory (ROM), random access memory (RAM), disk, CD or a memory unit having a similar function.

It should be noted that in these figures, structural and/or functional elements common to the different variants may have the same references.

Various other modifications may be made to the invention within the scope of the appended claims.

As a variant, the detection module 16 comprises a thermal sensor configured to detect the presence of human hand in the vicinity of the movable panel of the vehicle 100.

As a variant, the biometric recognition system 14 is configured to perform semantic segmentation on the at least one image captured by the imaging device 12.

## Claims

1. An unlocking system (10) for a movable panel of a vehicle, comprising:
- an imaging device (12) configured to capture at least one image in a region surrounding the vehicle,
- a biometric recognition device (14), configured to identify a user of the vehicle from the at least one image provided by the imaging device (12),
- a body detection module (16) fitted to the vehicle door.

2. An unlocking system (10) according to claim 1, wherein the body detection module (16) comprises a capacitive proximity sensor configured to detect the presence of a human hand.

3. An unlocking system (10) according to claim 1 or 2, wherein the biometric recognition device (14) comprises an artificial neural network which has been trained by deep learning to identify the vehicle user.

4. An unlocking system (10) according to any of claims 1 to 3, wherein the biometric recognition device (14) is configured to perform facial recognition on the at least one image captured by the imaging device (12).

5. An unlocking system (10) according to any of claims 1 to 4, wherein the biometric recognition device (14) is configured to perform instance segmentation on the at least one image captured by the imaging device (12).

6. An unlocking system (10) according to any of claims 1 to 5, wherein the imaging device (12) is configured to capture at least two images in a region surrounding the vehicle, and the biometric recognition device (14) is configured to perform a gait analysis from the at least two images captured by the imaging device (12).

7. Method implemented in an electronic system equipping a vehicle, the method comprising the following steps:
- E11) capturing at least one image in a region surrounding the vehicle,
- E21) identifying a user of the vehicle from the at least one captured image,
- if the user is identified in step E21), a step E31) of detecting a human hand in the vicinity of a movable panel of the vehicle,
- if a hand is detected in the vicinity of the vehicle door, a step E41) of unlocking the vehicle door.

8. Method according to claim 7, further comprising, if the unlocking step E41) is carried out, a feedback and advice step E51) for the vehicle user.

9. Method according to one of claims 7 or 8, also comprising a confidence score determination step E22) during which a confidence score is associated with the user identity determined during step E21).

10. A computer program product comprising one or more instruction sequences which are accessible to a processor and which, when executed by said processor, cause said processor to implement a method according to any of claims 7 to 9.

11. A non-transitory information storage medium, storing one or more sequences of instructions which are accessible to a processor and which, when executed by said processor, cause said processor to implement a method according to any of claims 7 to 9.
